# EUROPEAN PATENT APPLICATION

(11) **EP 4 614 588 A2**
(43) Date of publication of application: **10.09.2025**
(21) Application number: 25159202.8
(22) Date of filing: 20.02.2025
(51) Int. Cl.: H01M 4/133, H01M 4/134, H01M 4/36, H01M 4/38, H01M 4/587, H01M 4/62

(54) **NEGATIVE ELECTRODE MATERIAL, AND PREPARATION METHOD AND USE THEREOF**

(30) Priority: 08.03.2024 CN 202410281501
(71) Applicant: BYD Company Limited, Shenzhen, Guangdong 518118 (CN)
(72) Inventor: YAN, Yuantao, Shenzhen, 518118 (CN); XU, Shaohong, Shenzhen, 518118 (CN); QIAN, Huayu, Shenzhen, 518118 (CN); JIANG, Wei, Shenzhen, 518118 (CN); ZHANG, Kai, Shenzhen, 518118 (CN)
(74) Representative: Mathys & Squire

(57) **Abstract**

The present disclosure provides a negative electrode material, and a preparation method and use thereof. The negative electrode material comprises a silicon-carbon inner core. The silicon-carbon inner core comprises a porous silicon matrix and a carbon material arranged in the pores of the porous silicon matrix. The total pore volume of the silicon-carbon inner core is less than or equal to 0.0001 ml/g. The silicon-carbon inner core in the negative electrode material provided in the present disclosure has a dense structure, to reduce the specific surface area of the negative electrode material, and improve the mechanical strength and the specific capacity of the negative electrode material, thus facilitating the wide use of the negative electrode material.

## Description

### FIELD

The present disclosure relates to the field of batteries, and specifically to a negative electrode material, and a preparation method and use thereof.

### BACKGROUND

Silicon negative electrode material has a high specific capacity and a low intercalation and deintercalation potential, and is thus a desirable material for preparing batteries of high energy density. However, the silicon negative electrode material is prone to particle breakage during use, causing electrode pulverization, and leading to reduced capacity, degraded performance, and a shortened service life of the battery. To improve the cycle life of the battery, the structure of the silicon negative electrode material can be designed, for example, in the case of the porous silicon negative electrode material, to alleviate the stress damage and electrochemical performance degradation caused during the charging and discharging process. However, the porous silicon negative electrode material has low mechanical strength and a large specific surface area, and the prepared negative electrode sheet tends to break, causing the decline in the cycle performance and the decrease in the specific charge/discharge capacity. Therefore, there is a need to develop a negative electrode material with high mechanical strength, good specific capacity and low specific surface area.

### SUMMARY

In view of this, the present disclosure provides a negative electrode material, and a preparation method and use thereof. The negative electrode material comprises a silicon-carbon inner core. The silicon-carbon inner core improves the mechanical strength and the charge/discharge capacity of the negative electrode material, and reduces the specific surface area of the negative electrode material, thus facilitating the wide use of the negative electrode material.

In a first aspect, the present disclosure provides a negative electrode material. The negative electrode material comprises a silicon-carbon inner core. The silicon-carbon inner core comprises a porous silicon matrix and a carbon material arranged in the pores of the porous silicon matrix. The total pore volume of the silicon-carbon inner core is less than or equal to 0.0001 ml/g.

Optionally, the particle size D50 of the porous silicon matrix ranges from 5 µm to 10 µm.

Optionally, the porous silicon matrix has multiple grains, and the grain size is less than or equal to 2 nm.

Optionally, the specific surface area of the porous silicon matrix is greater than or equal to 750 m²/g.

Optionally, in the porous silicon matrix, the micropore volume accounts for 70% to 80% of the total pore volume of the porous silicon matrix, the mesopore volume accounts for 5% to 10% of the total pore volume of the porous silicon matrix, and the macropore volume accounts for 15% to 25% of the total pore volume of the porous silicon matrix.

Optionally, in the silicon-carbon inner core, the content in percent by weight of the porous silicon matrix ranges from 30% to 60%, and the content in percent by weight of the carbon material ranges from 40% to 70%.

Optionally, the specific surface area of the silicon-carbon inner core is less than or equal to 10 m²/g.

Optionally, the particle size D50 of the silicon-carbon inner core range from 5 µm to 10 µm.

Optionally, the negative electrode material further comprises a carbon particle, and the content in percent by weight of the carbon particle in the negative electrode material ranges from 85% to 95%.

Optionally, the negative electrode material further comprises a carbon coating layer, and the carbon coating layer is arranged on the surface of the silicon-carbon inner core.

Optionally, the thickness of the carbon coating layer ranges from 10 nm to 20 nm.

Optionally, in the negative electrode material, the content in percent by weight of the carbon coating layer ranges from 0.5% to 2%.

Optionally, the coating rate of the carbon coating layer ranges from 80% to 100%.

Optionally, the tap density of the negative electrode material is greater than or equal to 0.9 g/cm³.

Optionally, the compaction density of the negative electrode material is greater than or equal to 1.7 g/cm³.

Optionally, the Young's modulus of the negative electrode material ranges from 260 MPa to 300 MPa.

The silicon-carbon inner core in the negative electrode material provided in the present disclosure has a dense structure, to improve the mechanical strength and specific capacity of the negative electrode material and reduce the specific surface area of the negative electrode material, which contributes to the formation of a negative electrode material with excellent electrochemical performance.

In a second aspect, the present disclosure provides a method for preparing a negative electrode material, which comprises the following steps.

Carbon is deposited in a porous silicon matrix, to form a silicon-carbon inner core, with which the negative electrode material is obtained. The silicon-carbon inner core comprises the porous silicon matrix and the carbon material arranged in the porous silicon matrix. The total pore volume of the silicon-carbon inner core is less than or equal to 0.0001 ml/g.

Optionally, the gas flow rate for the carbon deposition ranges from 1 L/min to 10 L/min.

Optionally, a time of the carbon deposition ranges from 10 h to 15 h.

Optionally, a temperature of the carbon deposition ranges from 400°C to 700°C.

Optionally, the preparation method further comprises the following steps. A carbon coating treatment is performed on the silicon-carbon inner core, to form a carbon coating layer on the surface of the silicon-carbon inner core, with which the negative electrode material is obtained.

Optionally, the gas flow rate for the carbon coating treatment ranges from 0.05 L/min to 1 L/min.

Optionally, a time of the carbon coating treatment ranges from 0.5 h to 1 h.

Optionally, a temperature of the carbon coating treatment ranges from 400°C to 700°C.

The preparation method for the negative electrode material provided in the present disclosure is new, the preparation process is simple, and the prepared negative electrode material has high mechanical strength, good specific capacity, and good cycle performance. By the method, large-scale production of the negative electrode material can be achieved.

In a third aspect, the present disclosure provides a negative electrode sheet. The negative electrode sheet comprises a negative electrode active material layer. The negative electrode active material layer comprises a negative electrode material according to the first aspect or a negative electrode material prepared by the method according to the second aspect.

The negative electrode sheet provided in the present disclosure has high specific charge/discharge capacity, high stability, and a long service life, which is beneficial to improving the product competitiveness of the negative electrode sheet.

In a fourth aspect, the present disclosure provides a battery. The battery comprises a positive electrode sheet and a negative electrode sheet according to the third aspect.

The battery provided in the present disclosure has high battery capacity and excellent electrochemical performance, which is beneficial to the industrial application of the battery.

In a fifth aspect, the present disclosure provides an electric device. The electric device comprises a battery according to the fourth aspect.

The electric device provided in the present disclosure has excellent comprehensive performance, which facilitates the wide use of the electric device.

### BRIEF DESCRIPTION OF THE DRAWINGS

In order to describe the technical solutions according to the embodiments of the present disclosure or in the prior art more clearly, the drawings needed to be used in the embodiments or in the prior art will be described briefly below. The specific embodiments described herein are merely used to explain the present disclosure, and the present disclosure is not limited thereto.
FIG. 1 is a schematic cross-sectional view of a negative electrode material provided in an embodiment of the present disclosure.
FIG. 2 is a schematic cross-sectional view of a negative electrode material provided in another embodiment of the present disclosure.
FIG. 3 is a schematic cross-sectional view of a porous silicon matrix provided in an embodiment of the present disclosure.
FIG. 4 is a schematic cross-sectional view of a silicon-carbon inner core provided in an embodiment of the present disclosure.
FIG. 5 is a schematic cross-sectional view of a negative electrode sheet provided in an embodiment of the present disclosure.
FIG. 6 is a scanning electron microscopy image of a porous silicon matrix provided in Example 1.
FIG. 7 is a scanning electron microscopy image of a negative electrode material provided in Example 1.
FIG. 8 shows a scanning electron microscopy image and silicon element distribution of the negative electrode material after 1000 charge/discharge cycles of the battery provided in Example 1.

### List of reference numerals:

negative electrode material-100, silicon-carbon inner core-10, porous silicon matrix-11, carbon material-12, carbon coating layer-20, negative electrode sheet-200, negative electrode current collector-30, negative electrode active material layer-40.

### DETAILED DESCRIPTION

The technical solution according to the embodiments of the present disclosure will be described clearly and fully below. Apparently, the embodiments described are merely some, but not all of the embodiments of the present disclosure. All other embodiments obtained by a person of ordinary skill in the art based on the embodiments of the present disclosure without creative efforts shall fall within the protection scope of the present invention.

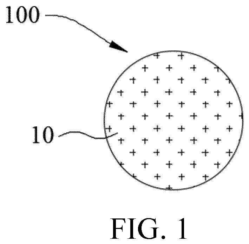

FIG. 1 is a schematic cross-sectional view of a negative electrode material provided in an embodiment of the present disclosure. A negative electrode material 100 comprises a silicon-carbon inner core 10. The silicon-carbon inner core 10 comprises a porous silicon matrix and a carbon material arranged in the pores of the porous silicon matrix. The total pore volume of the silicon-carbon inner core 10 is less than or equal to 0.0001 ml/g. When the total pore volume of the silicon-carbon inner core is less than or equal to 0.0001 ml/g, the silicon-carbon inner core is considered to have a dense structure. That is, the carbon material arranged inside the porous silicon matrix can transform the loose porous silicon matrix into the dense silicon-carbon inner core, to improve the mechanical strength of the negative electrode material and keep the negative electrode material from breakage when compacted under a large pressure. Meanwhile, the porous silicon matrix is fully filled by the carbon material, the specific surface area of the silicon-carbon inner core decreases greatly, which improves the first-cycle coulombic efficiency, and further enhances the specific capacity of the negative electrode material. The negative electrode material provided in the present disclosure has high mechanical strength, high specific capacity, and low specific surface area, thus facilitating the wide use of the negative electrode material.

In an embodiment of the present disclosure, the particle size D50 of the porous silicon matrix ranges from 5 µm to 10 µm, which contributes to the tap density and the compaction density of the negative electrode material. Particularly, the particle size D50 of the porous silicon matrix may be, but is not limited to, 5 µm, 6 µm, 7 µm, 8 µm, 9 µm, or 10 µm. In an embodiment of the present disclosure, the particle size D50 of the porous silicon matrix may range from 5 µm to 8 µm. In another embodiment of the present disclosure, the particle size D50 of the porous silicon matrix may range from 7 µm to 10 µm.

In an embodiment of the present disclosure, the porous silicon matrix has multiple silicon grains, and the silicon grain size is less than or equal to 2 nm. By means of these, the expansion stress generated in the charging and discharging process is reduced, and the structural stability of the silicon-carbon inner core is improved, so that the negative electrode material has no obvious breakage after a large number of cycles, to facilitate the use of the negative electrode material. Particularly, the silicon grain size of the porous silicon matrix may be, but is not limited to, less than or equal to 2 nm, less than or equal to 1.8 nm, less than or equal to 1.6 nm, less than or equal to 1.5 nm, or less than or equal to 1.2 nm. In an embodiment of the present disclosure, the silicon grain size of the porous silicon matrix may be less than or equal to 1.5 nm. In another embodiment of the present disclosure, the silicon grain size of the porous silicon matrix may be less than or equal to 1.2 nm.

In an embodiment of the present disclosure, in the silicon-carbon inner core, the content in percent by weight of the porous silicon matrix ranges from 30% to 60%, which improves the specific capacity and the energy density of the negative electrode material. Moreover, the porous silicon matrix is used as a skeleton structure, to facilitate the arrangement of the carbon material, and improve the conductivity of the negative electrode material. Particularly, the content in percent by weight of the porous silicon matrix may be, but is not limited to, 30%, 35%, 40%, 45%, 50%, 55%, or 60%. In an embodiment of the present disclosure, the content in percent by weight of the porous silicon matrix may range from 40% to 50%, to further enhance the performance of the negative electrode material. In another embodiment of the present disclosure, the content in percent by weight of the porous silicon matrix may range from 40% to 60%.

In an embodiment of the present disclosure, in the silicon-carbon inner core, the content in percent by weight of the carbon material ranges from 40% to 70%. The carbon material can increase the density of the silicon-carbon inner core, to reduce the pore volume of the silicon-carbon inner core, and improve the conductivity of the negative electrode material. Particularly, the content in percent by weight of the carbon material may be, but is not limited to, 40%, 45%, 50%, 55%, 60%, or 70%. In an embodiment of the present disclosure, the content in percent by weight of the carbon material may range from 40% to 55%. In another embodiment of the present disclosure, the content in percent by weight of the carbon material ranges from 50% to 70%.

In the present disclosure, the total pore volume of the silicon-carbon inner core is less than or equal to 0.0001 ml/g. In the present disclosure, the total pore volume comprises the volume of all pores in the silicon-carbon inner core. As the total pore volume decreases, the number of pores in the silicon-carbon inner core decreases, and the density of the silicon-carbon inner core increases. Particularly, the total pore volume of the silicon-carbon inner core may be, but is not limited to, less than or equal to 0.0001 ml/g. less than or equal to 0.00009 ml/g, less than or equal to 0.00008 ml/g, less than or equal to 0.00007 ml/g, less than or equal to 0.00006 ml/g, less than or equal to 0.00005 ml/g, less than or equal to 0.00004 ml/g, less than or equal to 0.00003 ml/g, less than or equal to 0.00002 ml/g, or less than or equal to 0.00001 ml/g. In an embodiment of the present disclosure, the total pore volume of the silicon-carbon inner core may be less than or equal to 0.00008 ml/g. In another embodiment of the present disclosure, the total pore volume of the silicon-carbon inner core may be less than or equal to 0.00005 ml/g.

In an embodiment of the present disclosure, the specific surface area of the silicon-carbon inner core is less than or equal to 10 m²/g. As the specific surface area of the silicon-carbon inner core decreases, the number of pores in the silicon-carbon inner core decreases, and the degree of filling of the carbon material in the silicon-carbon inner core increases. A specific surface area of the silicon-carbon inner core of 10 m²/g or less promotes the coulombic efficiency and the mechanical strength of the negative electrode material. Particularly, the specific surface area of the silicon-carbon inner core may be, but is not limited to, less than or equal to 10 m²/g, less than or equal to 9 m²/g, less than or equal to 8 m²/g, less than or equal to 7 m²/g, or less than or equal to 5 m²/g. In an embodiment of the present disclosure, the specific surface area of the silicon-carbon inner core may range from 2 m²/g to 7 m²/g, which improves the density of the silicon-carbon inner core, and further improves the mechanical strength and the coulombic efficiency of the negative electrode material. In another embodiment of the present disclosure, the specific surface area of the silicon-carbon inner core may be less than or equal to 5 m²/g.

In an embodiment of the present disclosure, the particle size D50 of the silicon-carbon inner core ranges from 5 µm to 10 µm, which contributes to the tap density and the compaction density of the negative electrode material. Particularly, the particle size D50 of the silicon-carbon inner core may be, but is not limited to, 5 µm, 6 µm, 7 µm, 8 µm, 9 µm, or 10 µm. In an embodiment of the present disclosure, the particle size D50 of the silicon-carbon inner core may range from 5 µm to 8 µm. In another embodiment of the present disclosure, the particle size D50 of the silicon-carbon inner core may range from 7 µm to 10 µm.

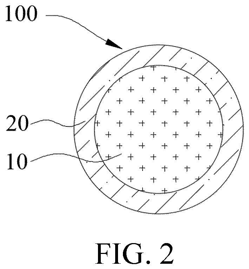

FIG. 2 is a schematic cross-sectional view of a negative electrode material provided in another embodiment of the present disclosure. The negative electrode material 100 further comprises a carbon coating layer 20, and the carbon coating layer 20 is arranged on the surface of silicon-carbon inner core 10. The silicon-carbon inner core has a dense structure, to improve the mechanical strength of the negative electrode material. The carbon coating layer can absorb and buffer the stress expansion in the charging and discharging process, to improve the structural stability of the negative electrode material. The particle has no obvious breakage after many cycles. The carbon coating layer passivates the possible defects on the surface of the silicon-carbon inner core, prevents the direct contact between the electrolyte solution and the defects, improves the stability of the negative electrode sheet, and further improves the cycle performance of the negative electrode material. In an embodiment of the present disclosure, the carbon coating layer has an amorphous structure, and can effectively absorb and buffer the expansion stress generated by the porous silicon matrix during the use of the negative electrode material, to further improve the structural stability of the negative electrode material.

In an embodiment of the present disclosure, the thickness of the carbon coating layer ranges from 10 nm to 20 nm, to ensure the mechanical performance of the negative electrode material, and improve the cycle performance of the negative electrode material. Particularly, the thickness of the carbon coating layer may be, but is not limited to, 10 nm, 12 nm, 14 nm, 16 nm, 18 nm, or 20 nm. In an embodiment of the present disclosure, the thickness of the carbon coating layer may range from 10 nm to 16 nm. In another embodiment of the present disclosure, the thickness of the carbon coating layer may range from 13 nm to 20 nm.

In an embodiment of the present disclosure, the coating rate of the carbon coating layer ranges from 80% to 100%. As a result, the structural stability of the negative electrode material is further improved, to improve the cycle stability of the negative electrode material. Particularly, the coating rate of the carbon coating layer may be, but is not limited to, 80%, 85%, 90%, 92%, 95%, or 100%. In an embodiment of the present disclosure, the coating rate of the carbon coating layer may range from 80% to 95%. In another embodiment of the present disclosure, the coating rate of the carbon coating layer may range from 90% to 100%.

In an embodiment of the present disclosure, in the negative electrode material, the content in percent by weight of the carbon coating layer ranges from 0.5% to 2%. As a result, the structural stability of the negative electrode material is improved, and the cycle performance of the negative electrode material is improved. Particularly, the content in percent by weight of the carbon coating layer may be, but is not limited to, 0.5%, 0.6%, 0.8%, 1%, 1.5%, or 2%. In an embodiment of the present disclosure, the content in percent by weight of the carbon coating layer may range from 0.5% to 1.6%. In another embodiment of the present disclosure, the content in percent by weight of the carbon coating layer may range from 1.2% to 2%.

In an embodiment of the present disclosure, in the negative electrode material, the content in percent by weight of the silicon-carbon inner core may range from 98% to 99.5%. Particularly, the content in percent by weight of the silicon-carbon inner core may be, but is not limited to, 98%, 98.5%, 98.7%, 98.9%, 99%, and 99.5%. In an embodiment of the present disclosure, the content in percent by weight of the silicon-carbon inner core may range from 98% to 99%. In another embodiment of the present disclosure, the content in percent by weight of the silicon-carbon inner core may range from 98.5% to 99%.

In an embodiment of the present disclosure, the tap density of the negative electrode material is greater than or equal to 0.9 g/cm³, which enhances the specific capacity of the negative electrode material. Particularly, the tap density of the negative electrode material may be, but is not limited to, greater than or equal to 0.9 g/cm³, greater than or equal to 0.92 g/cm³, greater than or equal to 0.95 g/cm³, greater than or equal to 0.97 g/cm³, or greater than or equal to 1 g/cm³. In an embodiment of the present disclosure, the tap density of the negative electrode material may range from 0.9 g/cm³ to 0.97 g/cm³. In another embodiment of the present disclosure, the tap density of the negative electrode material is greater than or equal to 0.95 g/cm³.

In an embodiment of the present disclosure, the compaction density of the negative electrode material is greater than or equal to 1.7 g/cm³, which enhances the specific capacity of the negative electrode material. Particularly, the compaction density of the negative electrode material may be, but is not limited to, greater than or equal to 1.7 g/cm³, greater than or equal to 1.75 g/cm³, greater than or equal to 1.8 g/cm³, greater than or equal to 1.85 g/cm³, greater than or equal to 1.9 g/cm³, or greater than or equal to 2 g/cm³. In an embodiment of the present disclosure, the compaction density of the negative electrode material is greater than or equal to 1.78 g/cm³. In another embodiment of the present disclosure, the compaction density of the negative electrode material is greater than or equal to 1.9 g/cm³.

In an embodiment of the present disclosure, the Young's modulus of the negative electrode material ranges from 260 MPa to 300 MPa. As the Young's modulus increases, the negative electrode material is unlikely to deform. This improves the structural stability of the negative electrode material, improves the compaction performance of the negative electrode material, and further improves the specific capacity of the negative electrode material. The Young's modulus of the negative electrode material is measured under an atomic force microscope. Particularly, the Young's modulus of the negative electrode material may be, but is not limited to, 260 MPa, 270 MPa, 280 MPa, 290 MPa, or 300 MPa. In an embodiment of the present disclosure, the Young's modulus of the negative electrode material may range from 260 MPa to 285 MPa. In another embodiment of the present disclosure, the Young's modulus of the negative electrode material may range from 280 MPa to 300 MPa.

In an embodiment of the present disclosure, the negative electrode material further comprises a carbon particle, to further enhance the conductivity of the negative electrode material. Particularly, the carbon particle may be, but is not limited to, graphite, soft carbon, hard carbon, carbon black, and graphene. In an embodiment of the present disclosure, the carbon particle may be graphite, to further enhance the conductivity of the negative electrode material, and thus increase the energy density of the negative electrode sheet.

In an embodiment of the present disclosure, the content in percent by weight of the carbon particle ranges from 85% to 95%. Particularly, the content in percent by weight of the carbon particle may be, but is not limited to, 85%, 88%, 90%, 92%, 94%, or 95%. In an embodiment of the present disclosure, the content in percent by weight of the carbon particle may range from 85% to 90%. In another embodiment of the present disclosure, the content in percent by weight of the carbon particle may range from 90% to 95%.

The present disclosure further provides a method for preparing a negative electrode material, which comprises the following steps. Carbon is deposited in a porous silicon matrix, to form a silicon-carbon inner core, with which the negative electrode material is obtained. The silicon-carbon inner core comprises the porous silicon matrix and the carbon material arranged in the porous silicon matrix. The total pore volume of the silicon-carbon inner core is less than or equal to 0.0001 ml/g. The preparation method of the present disclosure is new, and the preparation process is simple, to facilitate the preparation of a negative electrode material with high mechanical strength, good specific capacity and low specific surface area. The negative electrode material according to any of the above embodiments can be prepared by this preparation method.

In an embodiment of the present disclosure, the preparation method of the porous silicon matrix may comprise, without limitation, treating the silicon material, by at least one of magnesiothermic reduction, an electrochemical method, a silica sol method, a template method, and a catalyst method, to obtain the porous silicon matrix. In an embodiment of the present disclosure, the porous silicon matrix may be prepared by magnesiothermic reduction. Particularly, a magnesium powder is mixed with the silicon material, calcined at a high temperature under an inert atmosphere, etched by acid washing, washed for many times with water, and vacuum drying, to obtain the porous silicon matrix. In another embodiment of the present disclosure, the porous silicon matrix may be prepared by an electrochemical method.

In an embodiment of the present disclosure, the particle size D50 of the silicon material ranges from 5 µm to 10 µm. The particle size of the silicon material determines the particle size of the porous silicon matrix, and affects the tap density and compaction density of the negative electrode material. Particularly, the particle size D50 of the silicon material may be, but is not limited to, 5 µm, 6 µm, 7 µm, 8 µm, 9 µm, and 10 µm. In an embodiment of the present disclosure, the particle size D50 of the silicon material may range from 5 µm to 8 µm. In another embodiment of the present disclosure, the particle size D50 of the silicon material may range from 7 µm to 10 µm.

In an embodiment of the present disclosure, the material of the silicon material comprises at least one of elemental silicon, a silicon-carbon material, a silicon oxide material, and a silicon alloy. Particularly, the silicon material may comprise, but is not limited to, at least one of elemental silicon, silicon carbide, silicon tetrachloride, silica, silicon oxide, silicoaluminum, ferrosilicon, or silicomanganese. In an embodiment of the present disclosure, the silicon material may be elemental silicon. In another embodiment of the present disclosure, the silicon material may be silica.

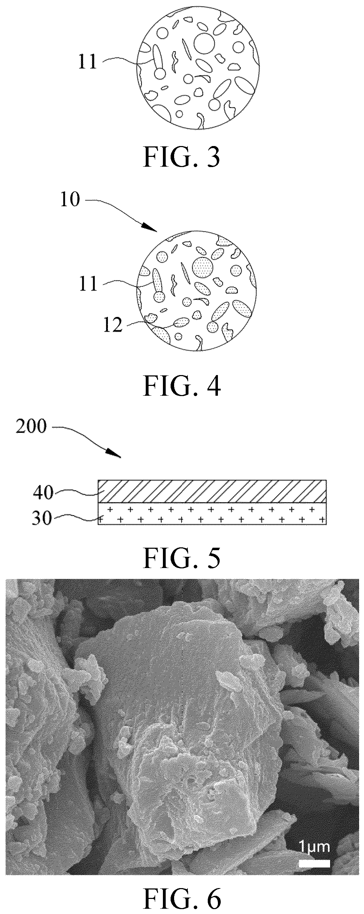

FIG. 3 is a schematic cross-sectional view of a porous silicon matrix provided in an embodiment of the present disclosure. A porous silicon matrix 11 has a porous structure. In an embodiment of the present disclosure, the specific surface area of the porous silicon matrix is greater than or equal to 750 m²/g. A larger specific surface area of the porous silicon matrix indicates a larger number of pores in the porous silicon matrix, and the porous silicon matrix has a loose porous structure, to facilitate the arrangement of the carbon material. Particularly, the specific surface area of the porous silicon matrix may be, but is not limited to, greater than or equal to 750 m²/g. greater than or equal to 760 m²/g, greater than or equal to 770 m²/g, greater than or equal to 780 m²/g, or greater than or equal to 790 m²/g. In an embodiment of the present disclosure, the specific surface area of the porous silicon matrix may be greater than or equal to 755 m²/g. In another embodiment of the present disclosure, the specific surface area of the porous silicon matrix may be greater than or equal to 770 m²/g.

In an embodiment of the present disclosure, the porous silicon matrix comprises micropores, mesopores, and macropores. The micropore is a pore having a pore size of less than 2 nm, the mesopore is a pore having a pore size of 2 nm to 50 nm, and the macropore is a pore having a pore size of greater than 50 nm. In an embodiment of the present disclosure, the micropore volume in the porous silicon matrix accounts for 70% to 80% of the total pore volume of the porous silicon matrix. Particularly, the micropore volume may account for, without limitation, 70%, 72%, 74%, 75%, 78%, 79%, or 80% of the total pore volume of the porous silicon matrix. In an embodiment of the present disclosure, the micropore volume may account for 70%- to 76% of the total pore volume of the porous silicon matrix. In another embodiment of the present disclosure, the micropore volume may account for 75% to 80% of the total pore volume of the porous silicon matrix. In an embodiment of the present disclosure, the mesopore volume in the porous silicon matrix accounts for 5% to 10% of the total pore volume of the porous silicon matrix. Particularly, the mesopore volume may account for, without limitation, 5%, 6%, 7%, 8%, 9%, or 10% of the total pore volume of the porous silicon matrix. In an embodiment of the present disclosure, the mesopore volume may account for 5% to 8.5% of the total pore volume of the porous silicon matrix. In another embodiment of the present disclosure, the mesopore volume may account for 7.8% to 10% of the total pore volume of the porous silicon matrix. In an embodiment of the present disclosure, the macropore volume in the porous silicon matrix accounts for 15% to 25% of the total pore volume of the porous silicon matrix. Particularly, the macropore volume accounts for 15%, 18%, 19%, 20%, 22%, or 25% of the total pore volume of the porous silicon matrix. In an embodiment of the present disclosure, the macropore volume may account for 15% to 21% of the total pore volume of the porous silicon matrix. In another embodiment of the present disclosure, the macropore volume may account for 19% to 25% of the total pore volume of the porous silicon matrix.

In an embodiment of the present disclosure, a gaseous carbon source is used for carbon deposition. The molecular diameter of the gaseous carbon source is small, which is beneficial to the filling of the narrow pores in the porous silicon matrix by deposition. Particularly, the carbon source for carbon deposition may be, but is not limited to, at least one of methane, ethane, ethylene, propylene, acetylene, and propyne. In an embodiment of the present disclosure, the carbon source for carbon deposition may be methane. In another embodiment of the present disclosure, the carbon source for carbon deposition may be acetylene, to further fill the porous silicon matrix by deposition, and increase the density of the silicon-carbon inner core.

In an embodiment of the present disclosure, the gas flow rate for carbon deposition ranges from 1 L/min to 10 L/min. In this way, the density and the mechanical strength of the silicon-carbon inner core are improved. Particularly, the gas flow rate for carbon deposition may be, but is not limited to, 1 L/min, 2 L/min, 4 L/min, 6 L/min, 8 L/min, or 10 L/min. In an embodiment of the present disclosure, the gas flow rate for carbon deposition may range from 5 L/min to 7 L/min, to further improve the deposition of the carbon material in the porous silicon matrix, and increase the density of the silicon-carbon inner core. In another embodiment of the present disclosure, the gas flow rate for carbon deposition may range from 4 L/min to 10 L/min.

In an embodiment of the present disclosure, the time of the carbon deposition ranges from 10 h to 15 h. In this way, the mechanical strength of the silicon-carbon inner core is improved. Particularly, the time of the carbon deposition may be, but is not limited to, 10 h, 11 h, 12 h, 13 h, 14 h, or 15 h. In an embodiment of the present disclosure, the time of the carbon deposition may range from 10 h to 14 h. In another embodiment of the present disclosure, the time of the carbon deposition may range from 13 h to 15 h.

In an embodiment of the present disclosure, the temperature of the carbon deposition ranges from 400°C to 700°C. Particularly, the temperature of the carbon deposition may be, but is not limited to, 400°C, 450°C, 500°C, 550°C, 600°C, 650°C, or 700°C. In an embodiment of the present disclosure, the temperature of the carbon deposition may range from 500°C to 700°C, to improve the mechanical strength of the negative electrode material. In another embodiment of the present disclosure, the temperature of the carbon deposition may range from 450°C to 550°C.

In an embodiment of the present disclosure, the device for carbon deposition may be, but is not limited to, a rotary furnace, a tubular furnace, or a fluidized bed, etc. In an embodiment of the present disclosure, the device for carbon deposition may be a tubular furnace. In another embodiment of the present disclosure, the device for carbon deposition may be a fluidized bed, to further improve the carbon deposition effect in the porous silicon matrix and improve the density of the silicon-carbon inner core.

FIG. 4 is a schematic cross-sectional view of a silicon-carbon inner core provided in an embodiment of the present disclosure. The silicon-carbon inner core 10 comprises the porous silicon matrix 11 and a carbon material arranged 12 in the porous silicon matrix. The carbon material is filled in the pores of the porous silicon matrix, to increase the density of the silicon-carbon inner core, reduce the specific surface area of the negative electrode material, and further improve the mechanical strength and the specific capacity of the negative electrode material, thus facilitating the wide use of the negative electrode material.

In an embodiment of the present disclosure, a carbon coating treatment is further included after carbon deposition, to form a carbon coating layer on the surface of the silicon-carbon inner core, and improve the cycle performance of the negative electrode material. Particularly, the carbon source for the carbon coating treatment may be, but is not limited to, at least one of methane, ethane, ethylene, propylene, acetylene, and propyne. In an embodiment of the present disclosure, the carbon source for the carbon coating treatment may be methane. In another embodiment of the present disclosure, the carbon source for the carbon coating treatment may be acetylene.

In an embodiment of the present disclosure, the gas flow rate for the carbon coating treatment ranges from 0.05 L/min to 1 L/min. As a result, a thinner carbon coating layer can be obtained. In this way, the stability of the negative electrode material is improved, and the negative electrode material is ensured to have a high mechanical performance, to obtain a negative electrode material with excellent comprehensive performance. Particularly, the gas flow rate for carbon coating treatment may be, but is not limited to, 0.05 L/min, 0.1 L/min, 0.3 L/min, 0.6 L/min, 0.8 L/min, or 1 L/min. In an embodiment of the present disclosure, the gas flow rate for carbon coating treatment may range from 0.05 L/min to 0.7 L/min. In another embodiment of the present disclosure, the gas flow rate for carbon coating treatment may range from 0.5 L/min to 1 L/min.

In an embodiment of the present disclosure, the time of the carbon coating treatment ranges from 0.5 h to 1 h. Thus, the thickness of the carbon coating layer can be controlled, and the electrochemical performance of the negative electrode material is improved. Particularly, the time of the carbon coating treatment may be, but is not limited, 0.5 h, 0.6 h, 0.7 h, 0.8 h, 0.9 h, or 1 h. In an embodiment of the present disclosure, the time of the carbon coating treatment may range from 0.5 h to 0.8 h. In another embodiment of the present disclosure, the time of the carbon coating treatment may range from 0.7 h to 1 h.

In an embodiment of the present disclosure, the temperature of the carbon coating treatment ranges from 400°C to 700°C. Particularly, the temperature of the carbon coating treatment may be, but is not limited to, 400°C, 450°C, 500°C, 550°C, 600°C, 650°C, or 700°C. In an embodiment of the present disclosure, the temperature of the carbon coating treatment may range from 500°C to 700°C, to improve the mechanical strength of the negative electrode material. In another embodiment of the present disclosure, the temperature of the carbon coating treatment may range from 450°C to 550°C.

In an embodiment of the present disclosure, the negative electrode sheet comprises a negative electrode active material layer. The negative electrode active material layer comprises a negative electrode material according to any of the above embodiments. Since the negative electrode sheet provided in the present disclosure has a negative electrode material with high mechanical strength, good cycle stability, and high specific capacity, the cycle life and the specific charge/discharge capacity of the negative electrode sheet are improved. FIG. 5 is a schematic cross-sectional view of a negative electrode sheet provided in an embodiment of the present disclosure. A negative electrode sheet 200 comprises a negative electrode current collector 30 and a negative electrode active material layer 40 arranged on the surface of the negative electrode current collector 30. The negative electrode active material layer 40 comprises a negative electrode material according to any of the above embodiments. Since the negative electrode sheet provided in the present disclosure has a negative electrode material with high mechanical strength, good cycle stability, and high specific capacity, the cycle life and the specific charge/discharge capacity of the negative electrode sheet are improved. In an embodiment of the present disclosure, the negative electrode current collector may be, but is not limited, at least one of copper, aluminum, nickel, and stainless steel. In an embodiment of the present disclosure, the negative electrode current collector may be a copper foil.

In an embodiment of the present disclosure, the negative electrode active material layer further comprises a binder. The binder can improve the bonding between various components in the negative electrode active material layer, and improve the bonding between the negative electrode active material layer and the current collector. Particularly, the binder can be, but is not limited to, one or more of polyvinylidene fluoride, polytetrafluoroethylene, polyethylene, polypropylene, polystyrene, polybutadiene, an acrylic resin, an epoxy resin, polyethylene oxide, sodium carboxymethyl cellulose, and styrene-butadiene latex. In an embodiment of the present disclosure, the binder may be polyvinylidene fluoride. In another embodiment of the present disclosure, the binder may be sodium carboxymethyl cellulose. In an embodiment of the present disclosure, the weight ratio of the negative electrode material to the binder is (60-99.9):(0.1-20). Particularly, the weight ratio of the negative electrode material to the binder may be, but is not limited to, 60:1, 60:10, 60:15, 70:5, 75:10, 80:5, 90:3, or 99.9:20. In an embodiment of the present disclosure, the weight ratio of the negative electrode material to the binder may be (75-85):(1-3), to further improve the bonding and conductivity of the electrode sheet. In another embodiment of the present disclosure, the weight ratio of the negative electrode material to the binder may be (60-95):(1-5). In another embodiment of the present disclosure, the weight ratio of the negative electrode material to the binder may be (90-99.9):(0.1-10).

In an embodiment of the present disclosure, the negative electrode active material layer further comprises a conductive agent. The conductive agent can increase the conductivity of the negative electrode material, to improve the electronic conductivity. Particularly, the conductive agent may comprise, but is not limited to, at least one of graphite, carbon black, acetylene black, and graphene. In an embodiment of the present disclosure, the conductive agent may be graphite. In another embodiment of the present disclosure, the conductive agent may be carbon black. In an embodiment of the present disclosure, the weight ratio of the negative electrode material, the conductive agent and the binder is (60-99.9):(1-20):(0.1-20). Particularly, the weight ratio of the negative electrode material, the conductive agent and the binder may be, but is not limited to, 60:1:0.1, 60:1:1, 70:1:3, 75:5:4, 80:5:6, 60:4:7, 80:10:1, 90:15:10, 95:3:5, or 99.9:20:20. In an embodiment of the present disclosure, the weight ratio of the negative electrode material, the conductive agent and the binder may be (75-85):(1-3):(1-5). In another embodiment of the present disclosure, the weight ratio of the negative electrode material, the conductive agent and the binder may be (60-95):(1-10):(1-10).

The present disclosure further provides a battery. The battery comprises a positive electrode sheet and a negative electrode sheet provided in any of the above embodiments. The negative electrode sheet has long cycle life and high specific charge/discharge capacity, so the battery provided in the present disclosure has high battery capacity and excellent cycle performance, thus facilitating the wide use of the battery.

In an embodiment of the present disclosure, the positive electrode sheet comprises a positive electrode current collector and a positive electrode active material layer arranged on a surface of the positive electrode current collector. The positive electrode active material layer comprises a positive electrode active material. Particularly, the positive current collector may be, but is not limited to, at least one of copper, aluminum, nickel, and stainless steel. The positive electrode active material may comprise, but is not limited to, at least one of a lithium cobalt oxide material, a lithium manganese oxide material, a nickel cobalt manganese material, and a nickel cobalt aluminum material. In an embodiment of the present disclosure, the positive electrode current collector may be an aluminum foil, and the positive electrode active material may be a lithium cobalt oxide material.

In an embodiment of the present disclosure, the battery also comprises a separator arranged between the positive electrode sheet and the negative electrode sheet. Particularly, the separator may be, but is not limited to, woven films, non-woven cloth, microporous membranes, composite membranes, rolled membranes, or separator paper. In an embodiment of the present disclosure, the battery further comprises an electrolyte solution. At least a portion of the positive electrode sheet and at least a portion of the negative electrode sheet are immersed in the electrolyte solution. The electrolyte solution is not particularly limited in the present disclosure, and materials useful in the electrolyte solution in the art can be used.

The present disclosure further provides an electric device. The electric device comprises the battery provided by any one of the above embodiments. The electric device provided in the present disclosure has excellent comprehensive performance, and high market competitiveness. The electric device of the present disclosure can be a vehicle, an electronic device, and an energy storage system, etc. The electrochemical device can be arranged in the electric device in the form of a single battery, a battery module, a battery pack, and a capacitor. In an embodiment of the present disclosure, the battery can be used in a vehicle, to improve the electrical safety of the vehicle during use. In another embodiment of the present disclosure, the battery can also be used in an electronic device, to increase the battery capacity of that electronic device, and improve the service life of the battery.

The technical effect of the solution provided in the present disclosure is further explained by way of specific examples.

### Example 1

40 g of a magnesium powder and 50 g of a silica powder (having a particle size D50 of 8.15 µm) are weighed, mixed evenly, fed into a tubular furnace, heated to 700°C at a heating rate of 5°C/min under an argon atmosphere, and held at this temperature for 5 h. Then the system is naturally cooled to room temperature. The obtained powder is etched in a 1 mol/L hydrochloric acid solution for 5 h, washed 3 times with water, and dried in a vacuum oven at 80°C, to obtain a porous silicon matrix.

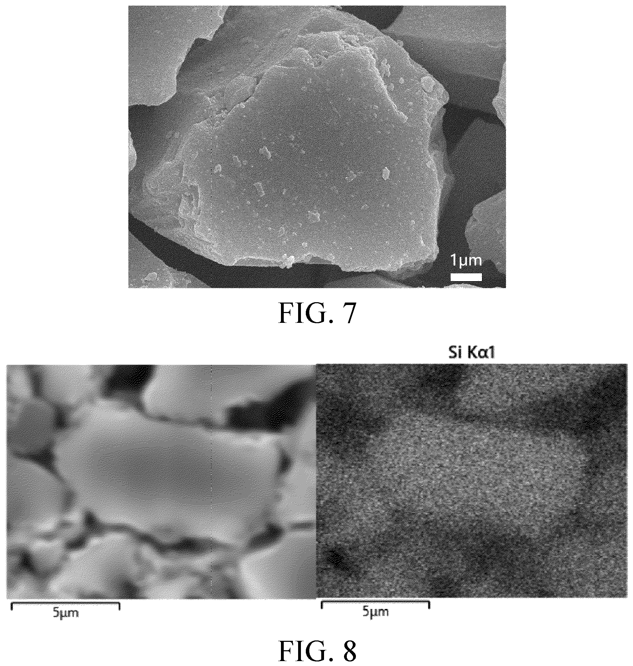

The porous silicon matrix is filled in a fluidized bed, acetylene gas is introduced at a gas flow rate of 6 L/min, and vapor-phase carbon deposition is carried out at 500°C for 12 h, to obtaining a silicon-carbon inner core after the pores in the porous silicon matrix are filled. Then carbon coating on the surface is carried by gradually reducing the flow rate of the acetylene gas to 0.05 L/min, for a time of the carbon coating treatment of 0.5 h, to obtain a negative electrode material. The prepared porous silicon matrix and negative electrode material are tested by scanning electron microscopy. The results are shown in FIGs. 6 and 7. FIG. 6 is a scanning electron microscopy (SEM) image of a porous silicon matrix provided in Example 1. FIG. 7 is a scanning electron microscopy (SEM) image of a negative electrode material provided in Example 1. As can be seen from the data in Tables 1 and 2, the appearance and morphology between the porous silicon matrix and the negative electrode material have no obvious change, but the specific surface area decreases greatly reduced, indicating that the gas-phase carbon source is mainly deposited and filled in the pores of the porous silicon matrix. This improves the density of the silicon-carbon inner core and improves the mechanical strength of the negative electrode material.

### Example 2

The difference from Example 1 is that the time of the carbon deposition is 15 h.

### Example 3

The difference from Example 1 is that the time of the carbon deposition is 10 h.

### Example 4

The difference from Example 1 is that the device for carbon deposition is a rotary furnace.

### Example 5

The difference from Example 1 is that the temperature of the carbon deposition is 400°C.

### Example 6

The difference from Example 1 is that the temperature of the carbon deposition is 700°C.

### Example 7

The difference from Example 1 is that the gas flow rate for carbon deposition is 1 L/min.

### Example 8

The difference from Example 1 is that the gas flow rate for carbon deposition is 10 L/min.

### Example 9

The difference from Example 1 is that the acetylene gas is replaced by ethylene gas.

### Example 10

The difference from Example 1 is that no carbon coating treatment is carried out.

### Comparative Example 1

The difference from Example 1 is that the particle size D50 of the silica powder is 3.73 µm.

### Comparative Example 2

The difference from Example 1 is that the particle size D50 of the silica powder is 11.31 µm.

### Comparative Example 3

The difference from Example 1 is that the gas flow rate for carbon deposition is 0.5 L/min.

### Comparative Example 4

The difference from Example 1 is that the gas flow rate for carbon deposition and carbon coating treatment is 0.1 L/min.

### Comparative Example 5

The difference from Example 1 is that the porous silicon matrix is directly used as a negative electrode material.

### Comparative Example 6

The difference from Example 1 is that silica is directly used as a negative electrode material.

### Comparative Example 7

The differences from Example 1 are as follows. A porous silicon material and a asphalt powder are physically mixed evenly, fed into a tubular furnace, heated to 1000°C at a heating rate of 5°C/min under an argon atmosphere, and held at this temperature for 5 h. Then the system is naturally cooled to room temperature.

### Comparative Example 8

The difference from Example 1 is that a porous carbon material having a specific surface area of 800 m² g⁻¹ is fed to a fluidized bed, silane gas is introduced at a gas flow rate of 6 L/min, and vapor-phase carbon deposition is carried out at 500°C. After deposition for 12 h, the silane gas flow rate is gradually reduced. Then carbon coating on the surface is carried by gradually reducing the flow rate of the acetylene gas to 0.05 L/min, for a time of the carbon coating treatment of 0.5 h, to obtain a negative electrode material.

### Performance test

According to GB/T 41949-2022, the particle sizes of the porous silicon matrices and the negative electrode materials prepared in Examples 1 to 10 and Comparative Examples 1 to 8 are tested by Mastersizer3000 laser particle size analyzer. The thickness of the carbon coating of the negative electrode materials prepared in Examples 1 to 10 and Comparative Examples 1 to 8 are tested by transmission electron microscopy (TEM). According to GB/T 19587-2017, the specific surface areas of the porous silicon matrices and the negative electrode materials prepared in Examples 1 to 10 and Comparative Examples 1 to 8 are tested by the BET method. According to GB/T 40066-2021, the mechanical strengths of the porous silicon matrices and the negative electrode materials prepared in Examples 1 to 10 and Comparative Examples 1 to 8 are tested by atomic force microscopy. (The specific method for calculating Young's modulus is as follows: 1. A constant-force mode is selected and a certain force constant is set in AFM. 2. An area to be tested is selected, and the constant force is applied on this area. 3. The surface deformation of the sample is measured, generally by measuring the vertical displacement of the AFM probe. 4. The Young's modulus of this area is calculated from the measured force and deformation of the sample). The results are shown in Table 1 and Table 2.

According to GB/T 19587-2017, the total pore volume of the silicon-carbon inner cores prepared in Examples 1 to 10 and Comparative Examples 1 to 8 are measured by using a specific surface area and pore size analyzer (model: 3H-2000PS2). The results are shown in Table 2. According to GB/T 5162-2021, the tap densities of the negative electrode materials prepared in Examples 1 to 10 and Comparative Examples 1 to 8 are tested by a powder tap density meter. The results are shown in Table 2. The negative electrode materials prepared in Examples 1 to 10 and Comparative Examples 1 to 8 are respectively mixed with graphite at a weight ratio of 1:9, and then prepared into a negative electrode sheet by a slurry process. Given a constant areal density of the negative electrode sheet of 6 mg/cm², the compaction density of the negative electrode sheet is tested. The results are shown in Table 2.

The negative electrode materials prepared in Examples 1 to 10 and Comparative Examples 1 to 8 are respectively mixed with graphite at a weight ratio of 1:9, and then prepared into a negative electrode sheet by a slurry process. A 5.2Ah battery is assembled with lithium cobalt oxide as the positive electrode. A high-temperature charge/discharge cycle test is carried out after formation. The high-temperature charge/discharge cycle test is carried out by charging at 1C and discharging at 1C (1C is 5.2A) at 45°C. The thickness expansion rate and capacity retention rate of the battery after 500 cycles at 45°C are calculated. The test results are shown in Table 3.

FIG. 8 shows a scanning electron microscopy (SEM) image and silicon element distribution of the negative electrode material after 1000 charge/discharge cycles of the battery provided in Example 1. It can be seen that after a large number of cycles, the silicon element in the negative electrode material still has a uniform distribution, and the negative electrode material does not break or smash, so the structural stability is high.

**Table 1. Performance test results of porous silicon matrix**

| | Specific surface area (m²/g) | D50 (µm) | Mechanical strength (MPa) |
|---|---|---|---|
| Example 1 | 752.3 | 8.17 | 72 |
| Example 2 | 752.3 | 8.17 | 72 |
| Example 3 | 752.3 | 8.17 | 72 |
| Example 4 | 752.3 | 8.17 | 72 |
| Example 5 | 752.3 | 8.17 | 72 |
| Example 6 | 752.3 | 8.17 | 72 |
| Example 7 | 752.3 | 8.17 | 72 |
| Example 8 | 752.3 | 8.17 | 72 |
| Example 9 | 752.3 | 8.17 | 72 |
| Example 10 | 752.3 | 8.17 | 72 |
| Comparative Example 1 | 877.2 | 3.72 | 81 |
| Comparative Example 2 | 713.3 | 11.30 | 70 |
| Comparative Example 3 | 752.3 | 8.17 | 72 |
| Comparative Example 4 | 752.3 | 8.17 | 72 |
| Comparative Example 5 | 752.3 | 8.17 | 72 |
| Comparative Example 6 | / | / | / |
| Comparative Example 7 | 752.3 | 8.17 | 72 |
| Comparative Example 8 | 793.2 | 8.31 | 67 |

**Table 2. Performance test results of negative electrode material**

| | Total pore volume of silicon-carbon inner core (ml/g) | Specific surface area (m²/g) | D50 (µm) | Thickness of carbon coating layer (nm) | Young's modulus (MPa) | Tap density (g/cm³) | Compaction density (g/cm³) |
|---|---|---|---|---|---|---|---|
| Example 1 | 0.00006 | 4.6 | 8.32 | 10 | 275 | 0.96 | 1.77 |
| Example 2 | 0.00004 | 4.3 | 8.33 | 10 | 279 | 0.97 | 1.78 |
| Example 3 | 0.00009 | 7.7 | 8.21 | 10 | 252 | 0.92 | 1.74 |
| Example 4 | 0.00009 | 6.7 | 8.27 | 10 | 231 | 0.9 | 1.73 |
| Example 5 | 0.0001 | 8.1 | 8.23 | 10 | 220 | 0.86 | 1.71 |
| Example 6 | 0.00008 | 6.6 | 8.3 | 10 | 270 | 0.93 | 1.76 |
| Example 7 | 0.00007 | 5.1 | 8.3 | 10 | 261 | 0.94 | 1.75 |
| Example 8 | 0.0001 | 6.5 | 8.26 | 10 | 225 | 0.87 | 1.72 |
| Example 9 | 0.00008 | 6.1 | 8.22 | 10 | 262 | 0.93 | 1.75 |
| Example 10 | 0.00009 | 5.3 | 8.31 | 0 | 267 | 0.95 | 1.76 |
| Comparative Example 1 | 0.00015 | 43.5 | 8.27 | 10 | 232 | 0.76 | 1.69 |
| Comparative Example 2 | 0.00037 | 77.1 | 8.25 | 10 | 191 | 0.72 | 1.65 |
| Comparative Example 3 | 0.03 | 277.5 | 8.19 | 10 | 101 | 0.69 | 1.62 |
| Comparative Example 4 | 0.06 | 391.2 | 8.18 | 5 | 86 | 0.62 | 1.61 |
| Comparative Example 5 | 0.11 | 752.3 | 8.17 | 0 | 72 | 0.48 | 1.6 |
| Comparative Example 6 | 0.00005 | 2.7 | 8.15 | 0 | 351 | 0.99 | 1.78 |
| Comparative Example 7 | 0.001 | 15.7 | 8.3 | 50 | 121 | 0.62 | 1.6 |
| Comparative Example 8 | 0.0009 | 7.3 | 8.22 | 10 | 197 | 0.73 | 1.66 |

**Table 3. Test results of battery performance**

| | Thickness expansion rate (%) | Capacity retention rate (%) |
|---|---|---|
| Example 1 | 8.6 | 93.2 |
| Example 2 | 8.6 | 93.7 |
| Example 3 | 8.8 | 91.7 |
| Example 4 | 9.0 | 90.0 |
| Example 5 | 9.3 | 89.1 |
| Example 6 | 9.3 | 90.7 |
| Example 7 | 9.2 | 91.3 |
| Example 8 | 9.7 | 88.3 |
| Example 9 | 9.1 | 90.3 |
| Example 10 | 9.4 | 88.1 |
| Comparative Example 1 | 10 | 87.1 |
| Comparative Example 2 | 10.7 | 86.1 |
| Comparative Example 3 | 11.4 | 84.3 |
| Comparative Example 4 | 12.7 | 81.1 |
| Comparative Example 5 | 14.2 | 76.3 |
| Comparative Example 6 | 19.3 | 62.1 |
| Comparative Example 7 | 13.1 | 77.2 |
| Comparative Example 8 | 10.2 | 86.1 |

It can be seen that compared with the comparative examples, the negative electrode materials obtained in the examples of the application have high mechanical strength, and the battery prepared therewith has low thickness expansion rate, high capacity retention rate, and excellent comprehensive performance. According to the test results of Example 1 and Comparative Examples 7-8, it is difficult to densely fill the porous silicon matrix by simple coating or conventional liquid-phase coating of carbon due to the narrow pores of the porous silicon matrix. In contrast, vapor deposition of carbon can improve the filling effect of carbon in the porous silicon matrix, and improve the mechanical strength and compaction performance of the negative electrode material. According to the test results of Examples 1 to 8 and Comparative Examples 1 to 6, suitable porous silicon particle size, temperature of the carbon deposition, gas flow rate, time and device, can improve the density, mechanical strength and tap density of the negative electrode material, and reduce the thickness expansion rate. According to the test results of Example 1 and Comparative Example 6, the negative electrode material provided in the present disclosure can reduce the thickness expansion rate of the battery and improve the capacity retention rate of the battery during use, compared with the conventional negative electrode material. The test results of Example 1 and Example 9 show that the carbon source of small gas-phase molecular diameter has diffusion resistance, and can well fill the narrow pores of the porous silicon matrix, to improve the filling effect of the porous silicon matrix. This promotes the formation of a negative electrode material having high mechanical strength, good tap density, and excellent electrochemical performance. The test results of Example 1 and Example 10 show that the carbon coating layer can further improve the capacity retention rate and structural stability of the negative electrode material.

Preferred embodiments of the present disclosure are described above, but which cannot be understood as a limitation on the scope of the present disclosure. It should be noted that several improvements and modifications can be made by those of ordinary skill in the art without departing from the principle of the present disclosure, which shall fall within the protection scope of the present disclosure.

## Claims

1. A negative electrode material, comprising a silicon-carbon inner core, the silicon-carbon inner core comprising a porous silicon matrix and a carbon material arranged in the pores of the porous silicon matrix, and a total pore volume of the silicon-carbon inner core being less than or equal to 0.0001 ml/g.

2. The negative electrode material according to claim 1, wherein a particle size D50 of the porous silicon matrix ranges from 5 µm to 10 µm,
the porous silicon matrix has a plurality of grains, and the grain size is less than or equal to 2 nm;
a specific surface area of the porous silicon matrix is greater than or equal to 750 m²/g; and
in the porous silicon matrix, a micropore volume accounts for 70% to 80% of a total pore volume of the porous silicon matrix, a mesopore volume accounts for 5% to 10% of the total pore volume of the porous silicon matrix, and a macropore volume accounts for 15% to 25% of the total pore volume of the porous silicon matrix.

3. The negative electrode material according to claim 1, wherein in the silicon-carbon inner core, a content in percent by weight of the porous silicon matrix ranges from 30% to 60%, and a content in percent by weight of the carbon material ranges from 40% to 70%.

4. The negative electrode material according to claim 1, wherein a specific surface area of the silicon-carbon inner core is less than or equal to 10 m²/g, and a particle size D50 of the silicon-carbon inner core ranges from 5 µm to 10 µm.

5. The negative electrode material according to claim 1, wherein the negative electrode material further comprises a carbon particle, and the content in percent by weight of the carbon particle in the negative electrode material ranges from 85% to 95%.

6. The negative electrode material according to claim 1, further comprising a carbon coating layer, the carbon coating layer being arranged on the surface of the silicon-carbon inner core.

7. The negative electrode material according to claim 6, wherein a thickness of the carbon coating layer ranges from 10 nm to 20 nm; and
in the negative electrode material, a content in percent by weight of the carbon coating layer ranges from 0.5% to 2%, and a coating rate of the carbon coating layer ranges from 80% to 100%.

8. The negative electrode material according to claim 1, wherein a tap density of the negative electrode material is greater than or equal to 0.9 g/cm³, and a compaction density of the negative electrode material is greater than or equal to 1.7 g/cm³.

9. The negative electrode material according to claim 1, wherein the Young's modulus of the negative electrode material ranges from 260 MPa to 300 MPa.

10. A preparation method for preparing a negative electrode material, comprising:
depositing carbon in a porous silicon matrix, to form a silicon-carbon inner core, with which the negative electrode material is obtained, the silicon-carbon inner core comprising the porous silicon matrix and the carbon material arranged in the pores of the porous silicon matrix, and a total pore volume of the silicon-carbon inner core being less than or equal to 0.0001 ml/g.

11. The preparation method according to claim 10, wherein a gas flow rate for the carbon deposition ranges from 1 L/min to 10 L/min, a time of the carbon deposition ranges from 10 h to 15 h, and a temperature of the carbon deposition ranges from 400°C to 700°C.

12. The preparation method according to claim 10, further comprising:
performing a carbon coating treatment on the silicon-carbon inner core, to form a carbon coating layer on the surface of the silicon-carbon inner core, with which the negative electrode material is obtained; preferably wherein a gas flow rate for the carbon coating treatment ranges from 0.05 L/min to 1 L/min, a time of the carbon coating treatment ranges from 0.5 h to 1 h, and a temperature of the carbon coating treatment ranges from 400°C to 700°C.

13. A negative electrode sheet, comprising a negative electrode active material layer, the negative electrode active material layer comprising a negative electrode material according to any one of claims 1 to 9 or a negative electrode material prepared by a preparation method according to any one of claims 10 to 12.

14. A battery, comprising a positive electrode sheet and a negative electrode sheet according to claim 13.

15. An electric device, comprising a battery according to claim 14.
